# EUROPÄISCHE PATENTSCHRIFT

(11) **EP 3 973 173 B1**
(45) Veröffentlichungstag und Bekanntmachung des Hinweises auf die Patenterteilung: **25.02.2026**
(21) Anmeldenummer: 20724477.3
(22) Anmeldetag: 06.05.2020
(51) Int. Cl.: F02M 61/20, F02M 21/02, F02M 43/04, F02M 47/04, F02M 47/02

(54) **DÜSENBAUGRUPPE FÜR EIN KRAFTSTOFFEINSPRITZVENTIL ZUM EINSPRITZEN EINES GASFÖRMIGEN UND/ODER FLÜSSIGEN KRAFTSTOFFS, KRAFTSTOFFEINSPRITZVENTIL**
NOZZLE ASSEMBLY FOR A FUEL INJECTION VALVE FOR INJECTING A GASEOUS AND/OR LIQUID FUEL, AND FUEL INJECTION VALVE
ENSEMBLE BUSE CONÇU POUR UN INJECTEUR DE CARBURANT POUR INJECTER UN CARBURANT GAZEUX ET/OU LIQUIDE, INJECTEUR DE CARBURANT

(30) Priorität: 20.05.2019 DE 102019207369
(43) Veröffentlichungstag der Anmeldung: 30.03.2022
(73) Patentinhaber: Robert Bosch GmbH, 70442 Stuttgart (DE)
(72) Erfinder: KOENINGER, Andreas, 75245 Neulingen-Goebrichen (DE)
(86) Internationale Anmeldenummer: PCT/EP2020/062544
(87) Internationale Veröffentlichungsnummer: WO 2020/233990

(56) Entgegenhaltungen:
- WO-A1-01/29403
- DE-A1- 102008 007 203
- DE-A1- 102009 002 836
- US-A- 4 005 685

## Beschreibung

Die Erfindung betrifft eine Düsenbaugruppe für ein Kraftstoffeinspritzventil mit den Merkmalen des Oberbegriffs des Anspruchs 1. Ferner betrifft die Erfindung ein Kraftstoffeinspritzventil zum Einspritzen eines gasförmigen und/oder flüssigen Kraftstoffs in einen Brennraum einer Brennkraftmaschine mit einer solchen Düsenbaugruppe.

### Stand der Technik

Kraftstoffventile der vorstehend genannten Art werden beispielsweise in Zweistoff-Einspritzverfahren zur Versorgung einer Brennkraftmaschine mit Kraftstoff eingesetzt. Bei einem Zweistoff-Brennverfahren wird zunächst ein selbstzündender Flüssigbrennstoff, beispielsweise Dieselkraftstoff, zur Vorkonditionierung direkt in den Brennraum eingebracht um die Zündtemperatur des anschließend eingebrachten Hauptenergieträgers, beispielsweise Methangas oder Flüssigmethanol, bereitzustellen. Der Hauptenergieträger bzw. Hauptkraftstoff kann dem Brennraum ebenfalls direkt oder indirekt über das Saugrohr zugeführt werden. In der Regel wird die Zumessung des Hauptkraftstoffs mit Hilfe eines Kraftstoffeinspritzventils realisiert, das mindestens ein hydraulisch ansteuerbares Stellglied in Form einer hin und her beweglichen Düsennadel aufweist. Der Flüssigkraftstoff für die Vorkonditionierung wird dabei zugleich als Steuermedium verwendet. Ein Gasventil für ein gasförmiges Medium ist aus der DE 10 2009 002 836 A1 bekannt.

In einem Zweistoff-Einspritzverfahren können folgende vier Injektor- bzw. Düsenkonzepte zum Einsatz gelangen:
1. Koaxialdüsenkonzept, das in einem Injektor realisiert ist,
2. Paralleldüsenkonzept, das in einem Injektor realisiert ist,
3. (direktes) Zwei-Injektoren-Konzept, bei dem beide Injektoren am Brennraum angeordnet sind und
4. (indirektes) Zwei-Injektoren-Konzept, bei dem der Injektor für den Hauptkraftstoff am Saugrohr angeordnet ist.

Bei dem Koaxialdüsenkonzept sind die Hochdruckräume der beiden Kraftstoffe über einen Ringspalt konstruktivbedingt miteinander verbunden, da die hin und her bewegliche Düsennadel geführt werden muss. Um aus Gründen der Sicherheit zu verhindern, dass Hauptkraftstoff über die Führung in den Bereich des als Zündkraftstoff und/oder als Steuermedium dienenden Flüssigkraftstoffs gelangt, wird der Druck des Flüssigkraftstoffs so eingeregelt, dass er immer über dem Druck des Hauptkraftstoffs liegt. Auf diese Weise ist sichergestellt, dass im Wege der Leckage lediglich Flüssigkraftstoff in den Bereich des Hauptkraftstoffs gelangt.

Die Leckage von Flüssigkraftstoff in den Bereich des Hauptkraftstoffs sollte jedoch so gering wie möglich sein, idealerweise ganz vermieden werden. Denn in den Schubphasen der Brennkraftmaschine kann sich über dem Dichtsitz der Düsennadel, welche die Zumessung des Hauptkraftstoffs steuert, eine nicht unerhebliche Menge an Flüssigkraftstoff sammeln, die in den darauffolgenden Einspritzungen zu einem zu hohen Energieeintrag in den Brennraum führt. Darunter leidet nicht nur der Fahrkomfort, sondern auch die Standfestigkeit der Brennkraftmaschine, was auf die dabei entstehenden zu hohen Brennraumdrücke zurückzuführen ist. Ferner kann eine Folge der Flüssigkraftstoffleckage in den Bereich des Hauptkraftstoffs sein, dass ein Fahrzeug mit Gasantrieb nicht die erforderliche Zertifizierung erhält. Denn um die Zertifizierung zu erlangen, muss sichergestellt sein, dass mindestens 90% der für den Betrieb der Brennkraftmaschine aufgewandten Energiemenge durch den gasförmigen Hauptkraftstoff aufgebracht wird.

Soll darüber hinaus die Brennkraftmaschine temporär allein mit Flüssigkraftstoff betrieben werden können (z. B. "Diesel-Only-Betrieb"), führt dies dazu, dass aufgrund des hohen Druckgefälles der Bereich des Hauptkraftstoffs mit Flüssigkraftstoff geflutet wird.

Wird ein Fahrzeug mit Gasantrieb abgestellt, soll im Gassystem ein Überdruck vorgehalten werden, während im Bereich des Flüssigkraftstoffs lediglich Umgebungsdruck vorherrscht. Somit kann Gas in den Bereich des Flüssigkraftstoffs gelangen, was aus sicherheitstechnischen Gründen zu vermeiden ist.

Lösungsansätze zur Vermeidung der vorstehend genannten Nachteile sehen beispielsweise eine Minimierung des Führungsspiels und/oder eine Maximierung der Führungslänge im Bereich der Führung der Düsennadel vor. Ferner ist der Einsatz von Radialdichtelementen, wie beispielsweise O-Ringe oder Kolbenringe, bekannt.

Diese Ansätze sind jedoch aufgrund von Verschleiß im Bereich der Führung über die Lebensdauer der Kraftstoffeinspritzventile und/oder aufgrund mangelnder Funktionssicherheit der Dichtelemente nicht ausreichend. Der vorliegenden Erfindung liegt daher die Aufgabe zugrunde, hier Abhilfe zu schaffen. Insbesondere soll eine sichere Medientrennung in einem Kraftstoffeinspritzventil erreicht werden, das sowohl als hydraulisch ansteuerbares Einstoff-Einspritzventil, als auch als hydraulisch ansteuerbares Zweistoff-Einspritzventil ausgelegt sein kann.

Zur Lösung der Aufgabe wird die Düsenbaugruppe mit den Merkmalen des Anspruchs 1 vorgeschlagen. Vorteilhafte Weiterbildungen der Erfindung sind den Unteransprüchen zu entnehmen. Ferner wird ein Kraftstoffeinspritzventil mit einer solchen Düsenbaugruppe angegeben.

### Offenbarung der Erfindung

Die für ein Kraftstoffeinspritzventil zum Einspritzen eines gasförmigen und/oder flüssigen Kraftstoffs in einen Brennraum einer Brennkraftmaschine vorgeschlagene Düsenbaugruppe umfasst ein mit einem Dichtsitz zusammenwirkendes, hin und her bewegliches Schließelement zum Freigeben und Verschließen mindestens einer Einspritzöffnung. Das Schließelement wird einerseits von Brennraumdruck und andererseits von einem Steuerdruck beaufschlagt, der in einem Steuerraum herrscht, der von einem Zulaufpfad für den Kraftstoff durch ein hülsenförmiges Dichtelement getrennt ist. Erfindungsgemäß ist das Schließelement kugelförmig oder zumindest im Bereich einer mit dem Dichtsitz zusammenwirkenden Dichtfläche teilkugelförmig geformt und mit dem hülsenförmigen Dichtelement unmittelbar oder mittelbar fluiddicht verbunden. Zum Bewegen des Schließelements wird der Steuerraum mit einem Steuermedium beaufschlagt bzw. entlastet, so dass das Schließelement in Abhängigkeit vom Steuerdruck im Steuerraum vom Dichtsitz abhebt oder in den Dichtsitz zurückgestellt wird.

Der Well- oder Faltenbalg ist besonders robust, was sich positiv auf die Lebensdauer des Dichtelements und damit auf die Lebensdauer des Kraftstoffeinspritzventils auswirkt. Ferner weist er zusätzliche Freiheitsgrade auf, die eine Kompensation etwaiger fertigungs- und/oder montagebedingter Toleranzen erleichtern. Beispielsweise können mit Hilfe derartiger Balgelemente Lateralversätze und/oder Verkippungen ausgeglichen werden. Durch die Fertigung des axial- und biegeelastischen Well- oder Faltenbalgs aus einem metallischen Werkstoff wird die Robustheit des Dichtelements weiter gesteigert.

Das kugel- oder zumindest teilkugelförmige Schließelement ersetzt ein nadelförmiges Schließelement, insbesondere eine Düsennadel. Damit entfällt auch die leckagebehaftete Führung der Düsennadel, was nicht ausschließt, dass das kugel- oder teilkugelförmige Schließelement geführt ist. Die Führung wird nur nicht durch das hülsenförmige Dichtelement realisiert, das vorliegend allein der Abdichtung des Steuerraums dient. Somit unterscheidet sich das hülsenförmige Dichtelement von einer herkömmlichen Dichthülse zur Aufnahme und Führung einer Düsennadel, die gemeinsam mit der Düsennadel zugleich den Steuerraum begrenzt.

Dadurch, dass das kugel- oder teilkugelförmige Schließelement mit dem hülsenförmigen Dichtelement unmittelbar oder mittelbar fluiddicht verbunden ist, wird eine Leckage aus dem Steuerraum in den Zulaufpfad des Kraftstoffs sowie in umgekehrter Richtung sicher unterbunden. Somit treten auch die in der Beschreibungseinleitung genannten Nachteile nicht auf.

Ferner erhöht sich die Dichtheit im Bereich des Dichtsitzes des Schließelements, da etwaige, aufgrund von fertigungs- und/oder montagebedingten Toleranzen auftretende Koaxialitäts- und/oder Winkelabweichungen durch die Kugel- bzw. Teilkugelform des Schließelements besser ausgeglichen werden können. Das heißt, dass das auf das kugel- oder teilkugelförmige Schließelement - im Unterschied zur Düsennadel - keine oder zumindest keine nennenswerten Querkräfte bzw. Kippmomente wirken, was zu einer gleichmäßigen Pressverteilung im Bereich des Dichtsitzes des Schließelements führt. Entsprechend reduziert sich der Verschleiß im Bereich des Dichtsitzes, so dass eine hohe Dichtheit des Dichtsitzes über die Lebensdauer des Kraftstoffeinspritzventils gewährleistet ist.

Gemäß einer bevorzugten Ausführungsform der Erfindung ist das kugel- oder teilkugelförmige Schließelement nicht unmittelbar, sondern mittelbar über eine Hülse mit dem hülsenförmigen Dichtelement fluiddicht verbunden. Über die Hülse kann in einfacher Weise ein Durchmessersprung zwischen dem Durchmesser des Dichtsitzes und dem Durchmesser des Steuerraums realisiert werden. Da von diesen beiden Parametern das Öffnungsverhalten der Düsenbaugruppe bzw. des Kraftstoffeinspritzventils abhängt, kann mit Hilfe der vorgeschlagenen Hülse die hydraulische Abstimmung vereinfacht werden. Die Hülse ist hierzu bevorzugt gestuft und/oder als Bundhülse ausgeführt. In der Ausgestaltung als Bundhülse erleichtert sie zudem die fluiddichte Verbindung des hülsenförmigen Dichtelements mit der Hülse.

Die fluiddichte Verbindung des hülsenförmigen Dichtelements mit dem kugel- oder teilkugelförmigen Schließelement bzw. mit der Hülse wird vorzugsweise durch eine stoffschlüssige Verbindung, insbesondere eine Löt-, Schweiß- oder Klebeverbindung realisiert. Die Löt-, Schweiß- oder Klebenaht wird weiterhin vorzugsweise umlaufend im Bereich eines ringförmigen Dichtkontakts der zu verbindenden Elemente gesetzt.

An seinem dem Schließelement abgewandten Ende ist vorzugsweise das hülsenförmige Dichtelement stoffschlüssig mit einem vorzugsweise plattenförmigen Körperbauteil der Düsenbaugruppe verbunden. Die gehäuseseitige Anbindung des hülsenförmigen Dichtelements ist somit ebenfalls fluiddicht ausgeführt. Der Stoffschluss kann wiederum mittels einer Löt-, Schweiß- oder Klebeverbindung bewirkt werden. Die Löt-, Schweiß- oder Klebenaht wird vorzugsweise umlaufend gesetzt, so dass eine Leckage sicher unterbunden wird. Gemäß einer bevorzugten Ausführungsform der Erfindung wird der Stoffschluss mittels Laserschweißen erreicht, da dieses Verfahren besonders präzise ist.

Vorzugsweise stellt das plattenförmige Körperbauteil eine weitere Begrenzung des Steuerraums dar. Bevorzugt ist im vorzugsweise plattenförmigen Körperbauteil mindestens eine in den Steuerraum mündende Drosselbohrung zur Ausbildung einer Zulaufdrossel und/oder einer Ablaufdrossel ausgebildet. Über die Dimensionierung der mindestens eine Drosselbohrung kann der Zulauf eines Steuermediums in bzw. der Ablauf eines Steuermediums aus dem Steuerraum eingestellt werden. Entsprechend kann hierüber der Steuerdruck im Steuerraum und damit das Öffnungs- und Schließverhalten des Schließelements beeinflusst werden.

Als weiterbildende Maßnahme wird vorgeschlagen, dass im Steuerraum ein Körper aufgenommen ist. Der Körper verkleinert das Volumen des Steuerraums, so dass dieser schneller befüllbar bzw. schneller entleerbar ist. Auf diese Weise kann ebenfalls Einfluss auf das Öffnungs- und Schließverhalten des Schließelements genommen werden. Bevorzugt ist der Körper am Körperbauteil abgestützt und/oder mit dem Körperbauteil fest verbunden. Der Körper kann in diesem Fall zugleich als Hubanschlag für das Schließelement dienen.

Des Weiteren bevorzugt ist das Schließelement durch das hülsenförmige Dichtelement in Richtung des Dichtsitzes vorgespannt. Dies ermöglicht den Wegfall einer separaten Schließfeder. Da beidseits des hülsenförmigen Dichtelements ein unterschiedlicher Druck herrschen kann, wird über den Differenzdruck eine in Schließrichtung wirkende Kraft erzeugt, die wiederum zur Vorspannung des Schließelements genutzt werden kann.

Ferner wird vorgeschlagen, dass das Schließelement mindestens einen Flächenanschliff zur Führung aufweist und/oder über in gleichem Winkelabstand zueinander angeordnete Führungsstege eines Düsenkörpers der Düsenbaugruppe axial geführt ist. Der mindestens eine Flächenanschliff bzw. die Führungsstege besitzen ausschließlich Führungsunktion und keine Dichtfunktion, da beidseits der Führung das gleiche Medium, und zwar der einzuspritzende Kraftstoff vorhanden ist.

Zur Lösung der eingangs genannten Aufgabe wird ferner ein Kraftstoffeinspritzventil zum Einspritzen eines gasförmigen und/oder flüssigen Kraftstoffs in einen Brennraum einer Brennkraftmaschine mit einer erfindungsgemäßen Düsenbaugruppe vorgeschlagen. Die Verwendung einer erfindungsgemäßen Düsenbaugruppe gewährleistet eine sichere Medientrennung bei zugleich einfachem Aufbau der Düsenbaugruppe. Dies gilt sowohl in der Ausführung des Kraftstoffeinspritzventils als Zweistoff-Einspritzventil, als auch in der Ausführung als Einstoff-Einspritzventil. Das Einstoff-Einspritzventil kann der Einspritzung eines flüssigen oder eines gasförmigen Kraftstoffs dienen. Die Einspritzung wird dabei hydraulisch gesteuert, so dass es in diesem Fall die Medien Kraftstoff und hydraulisches Steuermedium zu trennen gilt. Neben einem flüssigen Kraftstoff, wie beispielsweise Dieselkraftstoff, können auch andere Flüssigkeiten als hydraulisches Steuermedium dienen. Zum Beispiel kann ein Hydrauliköl oder Wasser als Steuermedium verwendet werden.

Bevorzugte Ausführungsformen der Erfindung werden nachfolgend anhand der beigefügten Zeichnungen näher erläutert. Diese zeigen:
Fig. 1 einen schematischen Längsschnitt durch eine erfindungsgemäße Düsenbaugruppe gemäß einer ersten bevorzugten Ausführungsform,
Fig. 2 einen schematischen Querschnitt durch die Düsenbaugruppe der Fig. 1 entlang der Strich-Punkt-Linie in der Fig. 1,
Fig. 3 einen schematischen Längsschnitt durch eine erfindungsgemäße Düsenbaugruppe gemäß einer zweiten bevorzugten Ausführungsform und
Fig. 4 einen schematischen Längsschnitt durch eine erfindungsgemäße Düsenbaugruppe gemäß einer dritten bevorzugten Ausführungsform.

### Ausführliche Beschreibung der Zeichnungen

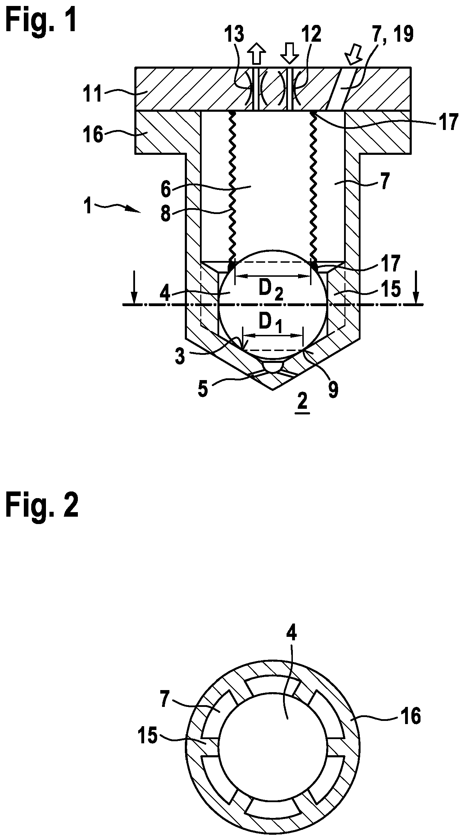

Die Fig. 1 zeigt eine Düsenbaugruppe 1 für ein Kraftstoffeinspritzventil zum Einspritzen von Kraftstoff in einen Brennraum 2 einer Brennkraftmaschine. Die Spitze der Düsenbaugruppe ragt in den Brennraum 2 hinein. Die Anordnung am bzw. Brennraum 2 ist jedoch nicht zwingend erforderlich. Beispielsweise kann das Kraftstoffventil auch an einem Saugrohr (nicht dargestellt) angeordnet werden, um den Kraftstoff indirekt über das Saugrohr in den Brennraum 2 einzuspritzen.

Die dargestellte Düsenbaugruppe 1 umfasst einen Düsenkörper 16, der einen kegelförmigen Dichtsitz 3 für ein kugelförmiges Schließelement 4 ausbildet, das im Düsenkörper 16 zum Freigeben und Verschließen mehrerer Einspritzöffnungen 5 hin und her beweglich aufgenommen ist. Das kugelförmige Schließelement 4 wird dabei über Führungsstege 15 des Düsenkörpers 16 geführt, die in gleichem Winkelabstand zueinander angeordnet sind (siehe Fig. 2). Die Zwischenräume zwischen den Führungsstegen 15 dienen als Zulaufpfad 7 für den Kraftstoff, so dass der Zulauf von Kraftstoff in Richtung der Einspritzöffnungen 5 gewährleistet ist. Das Schließelement 4 bildet eine Dichtfläche 9 aus, die aufgrund der Kugelform des Schließelements 4 zu einem ringförmigen Dichtkontakt mit dem kegelförmigen Dichtsitz 3 führt. Der ringförmige Dichtkontakt definiert den Sitzdurchmesser D₁ (siehe Fig. 1).

Die Bewegungen des Schließelements 4 werden hydraulisch gesteuert. Hierzu wird ein oberhalb des Schließelements 4 ausgebildeter Steuerraum 6 mit einem Steuermedium beaufschlagt bzw. entlastet, so dass in Abhängigkeit vom Steuerdruck im Steuerraum 6 das Schließelement 4 vom Dichtsitz 3 abhebt oder in den Dichtsitz 3 zurückgestellt wird. In radialer Richtung wird der Steuerraum 6 durch ein hülsenförmiges Dichtelement 8 begrenzt, das einerseits mit dem Schließelement 4 und andererseits mit einem plattenförmigen Körperbauteil 11 stoffschlüssig und damit fluiddicht verbunden ist. Auf diese Weise wird eine sichere Medientrennung zwischen dem Steuermedium und dem Kraftstoff bewirkt. Die stoffschlüssige bzw. fluiddichte Verbindung wird vorliegend über eine umlaufende Schweißnaht 17, insbesondere Laserschweißnaht, erreicht. Über eine im plattenförmigen Körperbauteil 11 ausgebildete Drosselbohrung bzw. Zulaufdrossel 12 ist der Steuerraum 6 mit dem Steuermedium befüllbar und über eine weitere Drosselbohrung bzw. Ablaufdrossel 13 entlastbar. Der Zulaufpfad 7 des Kraftstoffs führt über einen im Körperbauteil 11 ausgebildeten Zulaufkanal 19.

Das hülsenförmige Dichtelement 8 ist vorliegend als axial- und biegeelastischer Faltenbalg ausgeführt, der vorzugsweise aus einem metallischen Werkstoff gefertigt ist. Der Innendurchmesser D₂ des Dichtelements 8 bestimmt den Durchmesser des Steuerraums 6. Über das Durchmesserverhältnis der beiden Durchmesser D₁ und D₂ kann die hydraulische Abstimmung vorgenommen bzw. das Öffnungs- und Schließverhalten des Schließelements 4 beeinflusst werden.

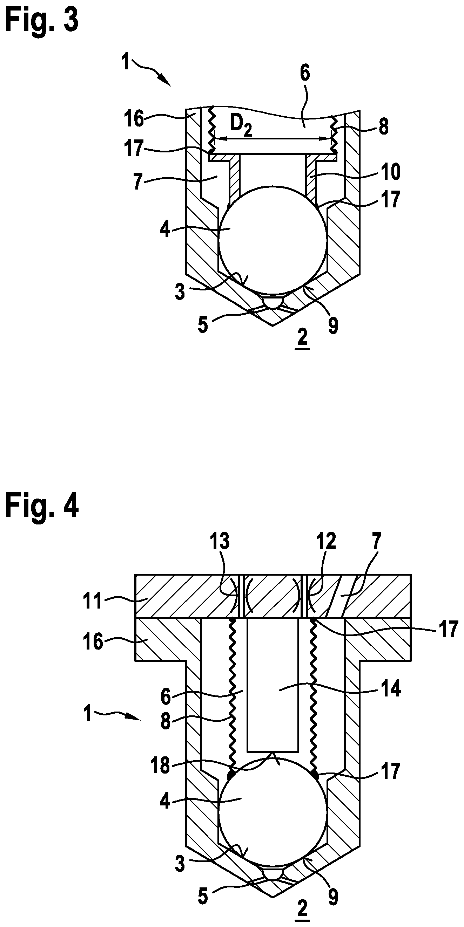

Bei einem ungünstigen Durchmesserverhältnis kann mit Hilfe einer Hülse 10 ein Durchmessersprung zur Optimierung des Durchmesserverhältnisses realisiert werden. Eine solche Hülse 10 ist beispielhaft in der Fig. 3 dargestellt. Die Hülse 10 ist als Bundhülse ausgeführt, so dass die stoffschlüssige Anbindung des hülsenförmigen Dichtelements 8 an die Hülse vereinfacht wird. Auch hier ist der Stoffschluss mit Hilfe einer Schweißnaht 17 hergestellt. Gleiches gilt für die Anbindung der Hülse 10 an das kugelförmige Schließelement 4.

Zur Reduzierung des Steuerraumvolumens kann im Steuerraum 6 ein Körper 14 aufgenommen sein. Ein solcher Körper 14 ist beispielhaft in der Fig. 4 dargestellt. Der dargestellte Körper 14 ist zylinderförmig und am plattenförmigen Körperbauteil 11 abgestützt. Andernends bildet der Körper 14 einen Hubanschlag 18 für das kugelförmige Schließelement 4 aus.

## Patentansprüche

1. Düsenbaugruppe (1) für ein Kraftstoffeinspritzventil zum Einspritzen eines gasförmigen und/oder flüssigen Kraftstoffs in einen Brennraum (2) einer Brennkraftmaschine, umfassend ein mit einem Dichtsitz (3) zusammenwirkendes, hin und her bewegliches Schließelement (4) zum Freigeben und Verschließen mindestens einer Einspritzöffnung (5), wobei das Schließelement (4) kugelförmig oder zumindest im Bereich einer mit dem Dichtsitz (3) zusammenwirkenden Dichtfläche (9) teilkugelförmig geformt ist und mit einem hülsenförmigen Dichtelement (8) unmittelbar oder mittelbar fluiddicht verbunden ist, und das Dichtelement (8) als axial- und biegeelastischer Well- oder Faltenbalg ausgebildet ist, der aus einem metallischen Werkstoff gefertigt ist,
**dadurch gekennzeichnet, dass** das Schließelement (4) einerseits von Brennraumdruck und andererseits von einem Steuerdruck beaufschlagt wird, der in einem Steuerraum (6) herrscht, der von einem Zulaufpfad (7) für den Kraftstoff durch das hülsenförmige Dichtelement (8) getrennt ist, wobei der Steuerraum (6) zum Bewegen des Schließelements (4) mit einem Steuermedium beaufschlagt bzw. entlastet wird, so dass das Schließelement (4) in Abhängigkeit vom Steuerdruck im Steuerraum (6) vom Dichtsitz (3) abhebt oder in den Dichtsitz (3) zurückgestellt wird.

2. Düsenbaugruppe nach Anspruch 1,
**dadurch gekennzeichnet, dass** das Schließelement (4) mittelbar über eine Hülse (10), die vorzugsweise gestuft und/oder als Bundhülse ausgeführt ist, mit dem Dichtelement (8) fluiddicht verbunden ist.

3. Düsenbaugruppe nach einem der vorhergehenden Ansprüche,
**dadurch gekennzeichnet, dass** das hülsenförmige Dichtelement (8) stoffschlüssig, beispielsweise mittels Laserschweißen, mit einem vorzugsweise plattenförmigen Körperbauteil (11) der Düsenbaugruppe (1) verbunden ist.

4. Düsenbaugruppe nach Anspruch 3,
**dadurch gekennzeichnet, dass** im vorzugsweise plattenförmigen Körperbauteil (11) mindestens eine in den Steuerraum (6) mündende Drosselbohrung (12, 13) zur Ausbildung einer Zulaufdrossel (12) und/oder einer Ablaufdrossel (13) ausgebildet ist.

5. Düsenbaugruppe nach einem der vorhergehenden Ansprüche,
**dadurch gekennzeichnet, dass** im Steuerraum (6) ein Körper (14) aufgenommen ist, der vorzugsweise am Körperbauteil (11) abgestützt und/oder mit dem Körperbauteil (11) fest verbunden ist.

6. Düsenbaugruppe nach einem der vorhergehenden Ansprüche,
**dadurch gekennzeichnet, dass** das Schließelement (4) durch das hülsenförmige Dichtelement (8) in Richtung des Dichtsitzes (3) vorgespannt ist.

7. Düsenbaugruppe nach einem der vorhergehenden Ansprüche,
**dadurch gekennzeichnet, dass** das Schließelement (4) mindestens einen Flächenanschliff zur Führung aufweist und/oder über in gleichem Winkelabstand zueinander angeordnete Führungsstege (15) eines Düsenkörpers (16) der Düsenbaugruppe (1) axial geführt ist.

8. Kraftstoffeinspritzventil zum Einspritzen eines gasförmigen und/oder flüssigen Kraftstoffs in einen Brennraum (2) einer Brennkraftmaschine mit einer Düsenbaugruppe (1) nach einem der vorhergehenden Ansprüche.

## Claims

1. Nozzle assembly (1) for a fuel injection valve for injecting a gaseous and/or liquid fuel into a combustion chamber (2) of an internal combustion engine, comprising a reciprocally movable closing element (4) which interacts with a sealing seat (3) to release and close at least one injection opening (5), wherein the closing element (4) is spherical, or formed to be partially spherical at least in the region of a sealing surface (9) which interacts with the sealing seat (3), and is connected to a sleeve-shaped sealing element (8) directly or indirectly in a fluid-tight manner, and the sealing element (8) is designed as an axially and flexibly elastic corrugated or folding bellows made from a metallic material,
**characterized in that** the closing element (4) is impinged, on the one hand, by combustion chamber pressure and, on the other hand, by a control pressure which prevails in a control chamber (6) which is separated from an inlet path (7) for the fuel by the sleeve-shaped sealing element (8), wherein the control chamber (6) for moving the closing element (4) is impinged or relieved by a control medium in such a way that the closing element (4) as a function of the control pressure in the control chamber (6) is lifted from the sealing seat (3) or returned into the sealing seat (3).

2. Nozzle assembly according to Claim 1,
**characterized in that** the closing element (4) is connected indirectly to the sealing element (8) in a fluid-tight manner by way of a sleeve (10) which is preferably stepped and/or designed as a collar sleeve.

3. Nozzle assembly according to one of the preceding claims,
**characterized in that** the sleeve-shaped sealing element (8) is connected to a preferably plate-shaped body component (11) of the nozzle assembly (1) in a materially integral manner, for example by means of laser welding.

4. Nozzle assembly according to Claim 3,
**characterized in that** formed in the preferably plate-shaped body component (11) is at least one throttle bore (12, 13) leading into the control chamber (6) for forming an inlet throttle (12) and/or an outlet throttle (13).

5. Nozzle assembly according to one of the preceding claims,
**characterized in that** received in the control chamber (6) is a body (14) which is preferably supported on the body component (11) and/or is fixedly connected to the body component (11).

6. Nozzle assembly according to one of the preceding claims,
**characterized in that** the closing element (4) is preloaded in the direction of the sealing seat (3) by the sleeve-shaped sealing element (8).

7. Nozzle assembly according to one of the preceding claims,
**characterized in that** the closing element (4) has at least one roughened surface for guiding and/or is guided axially by way of guide webs (15) of a nozzle body (16) of the nozzle assembly (1) that are disposed at an identical mutual angular spacing.

8. Fuel injection valve for injecting a gaseous and/or liquid fuel into a combustion chamber (2) of an internal combustion engine, having a nozzle assembly (1) according to one of the preceding claims.

## Revendications

1. Ensemble buse (1) pour une soupape d'injection de carburant pour injecter un carburant gazeux et/ou liquide dans une chambre de combustion (2) d'un moteur à combustion interne, comprenant un élément de fermeture (4) coopérant avec un siège d'étanchéité (3) et effectuant des mouvements de va-et-vient pour ouvrir et fermer au moins une ouverture d'injection (5), l'élément de fermeture (4) étant sphérique ou au moins en partie sphérique dans la zone d'une surface d'étanchéité (9) coopérant avec le siège d'étanchéité (3) et étant relié directement ou indirectement de manière étanche aux fluides à un élément d'étanchéité (8) en forme de douille, et l'élément d'étanchéité (8) étant formé comme un soufflet ondulé ou plié élastique axialement et en flexion, qui est produit à partir d'un matériau métallique,
**caractérisé en ce que** l'élément de fermeture (4) est soumis, d'une part, à l'action d'une pression de chambre de combustion et, d'autre part, à l'action d'une pression de commande régnant dans une chambre de commande (6) qui est séparée d'une voie d'arrivée (7) du carburant à travers l'élément d'étanchéité (8) en forme de douille, la chambre de commande (6) étant soumise à l'action d'un fluide de commande ou étant détendue pour déplacer l'élément de fermeture (4), de telle sorte que l'élément de fermeture (4) est soulevé du siège d'étanchéité (3) ou est ramené dans le siège d'étanchéité (3) en fonction de la pression de commande régnant dans la chambre de commande (6).

2. Ensemble buse selon la revendication 1,
**caractérisé en ce que** l'élément de fermeture (4) est relié de manière étanche aux fluides à l'élément d'étanchéité (8) indirectement par une douille (10), qui est de préférence étagée et/ou est formée comme une douille à collerette.

3. Ensemble buse selon l'une des revendications précédentes,
**caractérisé en ce que** l'élément d'étanchéité (8) en forme de douille est relié par liaison de matière, par exemple par soudage au laser, à un composant de corps (11) de préférence en forme de plaque de l'ensemble buse (1).

4. Ensemble buse selon la revendication 3,
**caractérisé en ce qu'**au moins un alésage d'étranglement (12, 13) débouchant dans la chambre de commande (6) est formé dans le composant de corps (11), de préférence en forme de plaque, pour former un étranglement d'entrée (12) et/ou un étranglement de sortie (13).

5. Ensemble buse selon l'une des revendications précédentes,
**caractérisé en ce qu'**est logé dans la chambre de commande (6) un corps (14), qui prend appui de préférence sur le composant de corps (11) et/ou relié de manière fixe au composant de corps (11).

6. Ensemble buse selon l'une des revendications précédentes,
**caractérisé en ce que** l'élément de fermeture (4) est précontraint en direction du siège d'étanchéité (3) par l'élément d'étanchéité (8) en forme de douille.

7. Ensemble buse selon l'une des revendications précédentes,
**caractérisé en ce que** l'élément de fermeture (4) comporte au moins une section de surface pour le guidage et/ou est guidé axialement par des nervures de guidage (15) d'un corps de buse (16) de l'ensemble buse (1) disposées à la même distance angulaire les unes par rapport aux autres.

8. Soupape d'injection de carburant pour injecter un carburant gazeux et/ou liquide dans une chambre de combustion (2) d'un moteur à combustion interne, avec un ensemble buse (1) selon l'une des revendications précédentes.
